(19) Europäisches Patentamt
European Patent Office
Office européen des brevets

(11) EP 1 210 172 B1

(12) **FASCICULE DE BREVET EUROPEEN**

(45) Date de publication et mention de la délivrance du brevet: **17.03.2004 Bulletin 2004/12**

(21) Numéro de dépôt: **00958600.9**

(22) Date de dépôt: **24.07.2000**

(51) Int Cl.7: **B01J 13/00**, C10L 1/14, C10L 1/10, C10L 10/02, C10L 10/06, C01F 17/00

(86) Numéro de dépôt international: **PCT/FR2000/002125**

(87) Numéro de publication internationale: **WO 2001/010545 (15.02.2001 Gazette 2001/07)**

(54) **DISPERSION COLLOIDALE ORGANIQUE DE PARTICULES MONOCRISTALLINES D'UN COMPOSE DE TERRE RARE**

ORGANISCHE KOLLOIDALE DISPERSION EINKRISTALLINER TEILCHEN EINER SELTENERDVERBINDUNG

ORGANIC COLLOIDAL DISPERSION OF A RARE EARTH COMPOUND MONOCRYSTALLINE PARTICLES

(84) Etats contractants désignés:
**AT BE CH CY DE DK ES FI FR GB GR IE IT LI LU MC NL PT SE**

(30) Priorité: **04.08.1999 FR 9910133**

(43) Date de publication de la demande: **05.06.2002 Bulletin 2002/23**

(73) Titulaire: **Rhodia Electronics and Catalysis 17041 La Rochelle (FR)**

(72) Inventeurs:
- **BLANCHARD, Gilbert F-60330 Lagny-le-Sec (FR)**
- **CHANE-CHING, Jean-Yves F-95600 Eaubonne (FR)**
- **BESSE, Véronique F-75007 Paris (FR)**

(74) Mandataire: **Dubruc, Philippe Rhodia Services, Direction da la Propriété Industrielle, 40, rue de la Haie-Coq 93306 Aubervilliers Cedex (FR)**

(56) Documents cités:
**EP-A- 0 097 563**
**EP-A- 0 304 369**
**EP-A- 0 671 205**
**FR-A- 2 681 534**
**FR-A- 2 741 281**
**FR-A- 2 768 155**

Remarques:
Le dossier contient des informations techniques présentées postérieurement au dépôt de la demande et ne figurant pas dans le présent fascicule.

EP 1 210 172 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention a pour objet une dispersion colloïdale organique comportant des particules essentiellement monocristallines d'au moins un composé à base d'au moins une terre rare ainsi que son procédé de préparation. L'invention concerne aussi l'utilisation de cette dispersion comme adjuvant de gazole pour moteurs à combustion interne.

On sait que lors de la combustion du gazole dans le moteur diesel, les produits carbonés ont tendance à former des suies, qui sont réputées nocives tant pour l'environnement que pour la santé. Il est recherché depuis longtemps des techniques qui permettent de réduire l'émission de ces particules carbonées, qu'on désignera dans la suite de la description sous l'expression de "suies".

Cette recherche est concomitante avec la nécessité de ne pas augmenter l'émission de monoxyde de carbone et de gaz réputés toxiques et mutagènes, tels que les oxydes d'azote.

De très nombreuses solutions ont été proposées pour réduire ces émissions carbonées.

Une solution qui serait satisfaisante consiste à introduire dans les suies des catalyseurs qui permettent une auto-inflammation fréquente des suies collectées dans le filtre. Pour cela, il faut que ces suies présentent une température d'auto-inflammation suffisamment basse pour être fréquemment atteinte pendant une marche normale du moteur.

On s'est aperçu que les dispersions colloïdales de terre(s) rare(s), pouvaient constituer un bon élément pour réduire la température d'auto-inflammation des suies.

Pour être utilisées de manière convenable et pour répondre aux exigences des industriels, il est souhaitable que les dispersions colloïdales présentent une bonne dispersibilité dans le milieu dans lequel elles sont introduites, une stabilité élevée dans le temps et une grande activité catalytique à une concentration relativement peu élevée.

Les dispersions colloïdales connues à ce jour ne satisfont pas toujours tous ces critères. Elles peuvent présenter par exemple une bonne dispersibilité mais pas une stabilité suffisante, ou une bonne stabilité mais une activité catalytique à des concentrations trop élevées pour qu'elles soient économiquement intéressantes.

En outre, on connaît par FR-A-2741281 et EP-A-671205 des dispersions de cérium notamment, qui sont stables mais qui conduisent à des suies dont la température d'auto-inflammation reste encore relativement élevée.

Le but de l'invention est principalement de fournir des dispersions colloïdales présentant une stabilité dans le temps et une activité catalytique accrue qui se traduit par une diminution de la température d'auto-inflammation des suies.

Ainsi la présente invention a pour objet une dispersion colloïdale organique comportant des particules d'au moins un composé à base d'au moins une terre rare et dont au moins 90 % desdites particules sont monocristallines, au moins un acide, et au moins un diluant.

Elle a également pour objet le procédé de préparation de ces dispersions dans lequel les particules d'au moins un composé d'au moins une terre rare sont synthétisées au sein d'une phase aqueuse, puis transférées au sein d'une phase organique.

L'invention a, en outre, pour objet l'utilisation de ces dispersions comme adjuvant de gazole pour moteurs à combustion interne.

Un des avantages des dispersions colloïdales de l'invention est qu'elles sont constituées de particules essentiellement monocristallines conduisant à l'obtention de dispersions stables. Les dispersions de l'invention présentent un autre avantage qui est la granulométrie fine et resserrée des particules. Cette granulométrie contribue, entre autres, à une amélioration sensible de la stabilité des dispersions. Cette stabilité doit s'entendre non seulement lorsque la dispersion colloïdale est concentrée mais aussi lorsqu'elle est diluée. De plus, les dispersions selon l'invention offrent une bonne dispersibilité dans le milieu dans lequel elles sont introduites.

D'autres caractéristiques, détails et avantages de l'invention apparaîtront encore plus complètement à la lecture de la description qui va suivre, ainsi que des divers exemples et figures destinés à l'illustrer.

Ainsi la présente invention a pour objet une dispersion colloïdale organique comportant :

- des particules d'au moins un composé à base d'au moins une terre rare,
- au moins un acide, et
- au moins un diluant,

caractérisée en ce qu'au moins 90 % des particules sont monocristallines.

Pour l'ensemble de la description il y aura lieu de retenir les définitions suivantes.

L'expression dispersion colloïdale d'un composé à base d'une terre rare désigne tout système constitué de fines particules solides de dimensions colloïdales à base dudit composé, en suspension dans une phase liquide, lesdites particules pouvant, en outre, éventuellement contenir des quantités résiduelles d'ions liés ou adsorbés tels que par exemple des nitrates, des acétates, des citrates ou des ammoniums. On notera que dans de telles dispersions, la

terre rare peut se trouver soit totalement sous la forme de colloïdes, soit simultanément sous la forme d'ions et sous la forme de colloïdes.

Au sens de l'invention, on entend par particules " monocristallines ", des particules qui sont individualisées et constituées d'un seul cristallite (ou du moins apparaissent n'être constituées que d'un seul cristallite) lorsque l'on examine la dispersion par MET (microscopie électronique à transmission haute résolution).

On peut aussi utiliser la technique de cryo-MET pour déterminer l'état d'agrégation des particules élementaires. Elle permet d'observer par microscopie électronique à transmission (MET) des échantillons maintenus congelés dans leur milieu naturel qui est soit de l'eau soit des diluants organiques tels que les solvants aromatiques ou aliphatiques comme par exemple le Solvesso et l'Isopar ou bien certains alcools tel que l'éthanol.

La congélation s'effectue sur des films minces d'environ 50 à 100 nm d'épaisseur soit dans l'éthane liquide pour les échantillons aqueux soit dans l'azote liquide pour les autres.

Par cryo-MET l'état de dispersion des particules est bien préservé et représentatif de celui présent dans le milieu réel.

Par terre rare on entend les éléments du groupe constitué par l'yttrium, le scandium, et les éléments de la classification périodique de numéro atomique compris entre 57 et 71. La classification périodique des éléments à laquelle il est fait référence dans toute la description, est celle publiée dans le Supplément au Bulletin Chimique de France n° 1 (janvier 1966).

En ce qui concerne la terre rare, celle-ci peut être plus particulièrement choisie parmi le cérium, le lanthane, l'yttrium, le néodyme, le gadolinium, et le praséodyme. De préférence, la terre rare est choisi parmi le cérium, le lanthane, l'yttrium et le praséodyme.

Comme déjà indiqué, les dispersions colloïdales selon l'invention peuvent comporter au moins un composé à base d'au moins une terre rare. Ledit composé peut donc être à base de deux ou de plusieurs terres rares, qui peuvent être identiques ou différentes.

Dans le cas d'un composé à base d'au moins deux terres rares, identiques ou différentes, lesdites terres rares peuvent présenter des degré d'oxydation différents. Le degré d'oxydation des terres rares est en général égal à ou compris entre +3 et +4.

Selon un mode de réalisation avantageux de l'invention, les dispersions colloïdales peuvent aussi comporter au moins un autre élément (E) choisi dans les groupes IIA, IVA, VIIA, IB, IIB, IIIB et IVB de la classification périodique des éléments.

A ce titre, on peut mentionner plus particulièrement le fer, le cuivre, le strontium, le zirconium, le titane,le gallium, le palladium, le manganèse.

En ce qui concerne les proportions respectives des éléments rentrant dans la composition de(s) composé(s) mentionné(s) précédemment, en cas de présence d'au moins une terre rare avec au moins un élément (E), la proportion en terre(s) rare(s) est de préférence d'au moins 10 %, plus particulièrement d'au moins 20 %, et encore plus particulièrement d'au moins 50 %, en mole par rapport au nombre de mole total d'élément(s) de terre(s) rare(s) et de (E) exprimés en oxyde.

La composition de(s)dit(s) composé(s) sera complétée avec un ou plusieurs élément(s) (E ) à 100 % en mole par rapport au nombre de mole total d'élément(s) de terre(s) rare(s) et de (E) exprimés en oxyde.

Comme il a déjà été mentionné, dans les dispersions selon l'invention les particules présentent une granulométrie fine et resserrée. En effet, elles présentent un $d_{50}$ compris entre 1 et 5 nm, de préférence entre 2 et 3 nm.

Dans la présente description, les caractéristiques de granulométrie font souvent référence à des notations du type $d_n$ où n est un nombre de 1 à 99. Cette notation représente la taille des particules telle que n % en nombre desdites particules ait une taille inférieure ou égale à ladite taille. Par exemple, un $d_{50}$ de 3 nanomètres signifie que 50 % en nombre des particules ont une taille inférieure ou égale à 3 nanomètres.

La granulométrie est déterminée par microscopie électronique à transmission (MET), de manière classique, sur un échantillon préalablement séché sur une membrane de carbone supportée sur grille de cuivre.

Cette technique de préparation est préférée car elle permet une meilleure précision de la mesure de la taille des particules. Les zones choisies pour les mesures sont celles qui présentent un état de dispersion semblables à celui observé en cryo-MET.

Outre les particules susmentionnées, la dispersion colloïdale organique selon l'invention comporte au moins un acide, avantageusement amphiphile. L'acide comporte de 10 à 50 atomes de carbone, de préférence de 15 à 25 atomes de carbone.

Ces acides peuvent être linéaires ou ramifiés. Ils peuvent être des acides aryliques, aliphatiques ou arylaliphatiques, portant éventuellement d'autres fonctions à condition que ces fonctions soient stables dans les milieux où l'on désire utiliser les dispersions selon la présente invention. Ainsi, on peut mettre en oeuvre par exemple des acides carboxyliques aliphatiques, dés acides sulfoniques aliphatiques, des acides phosphoniques aliphatiques, des acides alcoylarylsulfoniques et des acides alcoylarylphosphoniques, qu'ils soient naturels ou synthétiques. Il est bien entendu possible d'utiliser les acides en mélange.

A titre d'exemple, on peut citer les acides gras de tallol, d'huile de soja, de suif, d'huile de lin, l'acide oléique, l'acide linoléique, l'acide stéarique et ses isomères, l'acide pélargonique, l'acide caprique, l'acide laurique, l'acide myristique, l'acide dodécylbenzènesulfonique, l'acide éthyl-2 hexanoïque, l'acide naphténique, l'acide hexoïque, l'acide toluène sulfonique, l'acide toluène phosphonique, l'acide lauryl sulfonique, l'acide lauryl phosphonique, l'acide palmityl sulfonique, et l'acide palmityl phosphonique.

Dans le cadre de la présente invention, le terme " acide amphiphile " peut également désigner d'autres agents amphiphiles comme par exemple les alkyl éthers phosphates polyoxyéthylénés. On entend ici les phosphates de formule :

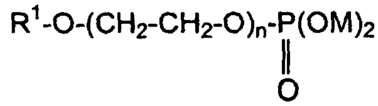

ou encore les phosphates de dialcoyle polyoxyéthylénés de formule :
dans laquelle :

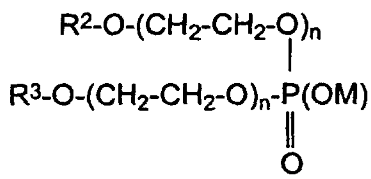

- $R^1$, $R^2$, $R^3$, identiques ou différents représentent un radical alkyl linéaire ou ramifié, notamment de 2 à 20 atomes de carbone; un radical phényle; un radical alkylaryl, plus particulièrement un radical alkylphényl, avec notamment une chaîne alkyle de 8 à 12 atomes de carbone; un radical arylalkyle, plus particulièrement un radical phénylaryl;
- n le nombre d'oxyde d'éthylène pouvant aller de 0 à 12 par exemple;
- M représente un atome d'hydrogène, de sodium ou de potassium.

Le radical $R^1$ peut être notamment un radical hexyle, octyle, décyle, dodécyle, oléyle, nonylphényle.

On peut citer comme exemple de ce type de composés amphiphiles ceux commercialisés sous les marques Lubrophos® et Rhodafac® vendu par Rhodia et notamment les produits ci-dessous :

- les poly-oxy-éthylène alkyl (C8-C10) éthers phosphates Rhodafac® RA 600
- le poly-oxyéthylène tridécyl éther phosphate Rhodafac® RS 710 ou RS 410
- le poly-oxy-éthylène oléocétyl éther phosphate Rhodafac® PA 35
- le poly-oxy-éthylène nonylphenyl éther phosphate Rhodafac® PA 17
- le poly-oxy-éthylène nonyl(ramifié) éther phosphate Rhodafac® RE 610.

Les dispersions colloïdales selon l'invention comportent également au moins un diluant. Le diluant sera choisi en tenant compte de l'acide utilisé, de la température de chauffage et de l'application finale de la dispersion colloïdale.

Le diluant peut être un hydrocarbure apolaire. A titre d'exemple on peut citer les hydrocarbures aliphatiques comme l'hexane, l'heptane, l'octane, le nonane, les hydrocarbures cycloaliphatiques inertes tels que le cyclohexane, le cyclopentane, le cycloheptane, les hydrocarbures aromatiques tels que le benzène, le toluène, l'éthylbenzène, les xylènes, les naphtènes liquides. Conviennent également les coupes pétrolières du type Isopar ou Solvesso (marque déposée par la Société EXXON), notamment Solvesso 100 qui contient essentiellement un mélange de méthyléthyl- et triméthyl-benzène, le Solvesso 150 qui renferme un mélange d'alcoylbenzènes en particulier de diméthylbenzène et de tétraméthylbenzène et l'Isopar qui contient essentiellement des hydrocarbures iso- et cyclo-parraffiniques en C-11 et C-12.

On peut mettre en oeuvre également des hydrocarbures chlorés tels que le chloro- ou le dichloro-benzène, le chlorotoluène. Les éthers ainsi que les cétones aliphatiques et cycloaliphatiques comme par exemple l'éther de diisopropyle, l'éther de dibutyle, la méthylisobutylcétone, la diisobutylcétone, l'oxyde de mésityle, peuvent être envisagés.

Le diluant peut être utilisé seul ou sous forme d'un mélange de diluants.

La proportion de l'acide et du diluant par rapport au composé de terre rare, est ajustée de manière à obtenir

une dispersion stable. Bien entendu, lorsque la dispersion comprend, outre la ou les terre(s) rare(s), un élément (E) tel que mentionné plus haut, la proportion de l'acide et du diluant sera ajustée par rapport à l'ensemble de terre(s) rare (s) et d'élément(s) présents.

Les dispersions selon l'invention présentent une concentration en composé(s) de terre(s) rare(s) qui peut aller jusqu'à 40 % en poids d'oxyde(s) de terre(s) rare(s) par rapport au poids total de la dispersion.

Dans le mode de réalisation particulier de l'invention où au moins un élément (E) est en plus présent, la concentration en composés(s) de terre(s) terre(s) et d'élément(s) (E) peut aller jusqu'à 40 % en poids d'oxyde(s) de terre(s) rare(s) et d'élément(s) (E) par rapport au poids total de la dispersion. Cette concentration sera de préférence comprise entre 1 et 32 % en poids d'oxyde(s) de terre(s) rare(s) et d'élément(s) (E) par rapport au poids total de la dispersion.

Les dispersions de l'invention présentent une excellente stabilité. On n'observe pas de décantation au bout de plusieurs mois voire plusieurs années.

Un autre aspect de la présente invention est le procédé de préparation des dispersions précitées.

Dans ce procédé, les particules sont synthétisées au sein d'une phase aqueuse, puis transférées au sein d'une phase organique, avantageusement sans étape de séchage.

Ce procédé comporte les étapes suivantes :

a) on prépare un mélange aqueux comprenant au moins un sel soluble, de préférence un acétate et/ou un nitrate, de l'élément ou des éléments qui rentrent dans la composition des particules que l'on cherche à obtenir,

b) on met le mélange aqueux de l'étape (a) en contact avec un milieu basique pour former un mélange réactionnel dont le pH est maintenu à un pH basique, ce par quoi on obtient, à l'issue de la réaction, un précipité ou une dispersion colloïdale aqueuse,

c) on met en contact soit la dispersion colloïdale aqueuse directement issue de l'étape (b) soit le précipité sous forme humide issu de l'étape (b) ou éventuellement redispersé en suspension aqueuse, avec au moins un acide et un diluant, pour obtenir une dispersion colloïdale organique.

La première étape du procédé (étape a) consiste à préparer un mélange aqueux, sous forme habituellement d'une solution ou dispersion, d'élément(s) rentrant dans la composition des particules que l'on cherche à obtenir. Ce mélange comprend au moins un sel soluble, de préférence un acétate et/ou un nitrate de terre rare et éventuellement au moins un sel d'un élément (E) choisi dans le groupe IIA, IVA, VIIA, VIII, IB, IIB, IIIB, et IVB de la classification périodique des éléments.

L'étape suivante (étape b) consiste à mettre en contact le mélange aqueux précité avec un milieu basique. Par milieu basique on entend tout milieu présentant un pH supérieur à 7. Le milieu basique sera habituellement une solution aqueuse contenant une base. On peut utiliser notamment comme base, les produits du type hydroxyde. On peut citer les hydroxydes alcalins ou alcalino-terreux. On peut aussi utiliser les amines secondaires, tertiaires, ou quaternaires. Toutefois, les amines et l'ammoniaque peuvent être préférés dans la mesure ou ils diminuent les risques de pollution par les cations alcalins ou alcalino-terreux. On peut aussi mentionner l'urée.

La mise en contact du mélange précité et du milieu basique se fait dans des conditions telles que le pH du mélange réactionnel que l'on forme reste basique et invariable. Ainsi, on maintient le pH du mélange réactionnel à une valeur d'au moins 7, plus particulièrement d'au moins 7,5, et encore plus particulièrement comprise entre 7,5 et 10,5.

La mise en contact du mélange aqueux et du milieu basique peut se faire par introduction du mélange précité dans le milieu basique. Il est possible de réaliser la mise en contact en continu, la condition de pH étant réalisée en réglant les débits respectifs du mélange et de milieu basique.

Il est possible, selon un mode de réalisation particulier de l'invention, de travailler dans des conditions telles que lors de la mise en contact du mélange avec le milieu basique on maintienne constant le pH du milieu réactionnel ainsi formé. De telles conditions peuvent être obtenues en ajoutant lors de l'introduction du mélange dans le milieu basique une quantité supplémentaire de base au mélange réactionnel formé.

La mise en contact se fait habituellement à température ambiante. Cette mise en contact peut avantageusement être réalisée sous atmosphère d'air ou d'azote ou d'un mélange azote-air.

A l'issue de la réaction, on récupère un précipité ou une dispersion colloïdale aqueuse.

Dans le cas d'obtention d'un précipité, on peut éventuellement séparer ce précipité de ses eaux mères par filtration, centrifugation ou tout autre moyen connu de l'homme de l'art permettant une telle séparation. Le précipité sera avantageusement sous forme humide. Le produit séparé peut être lavé.

Dans la suite du procédé, le précipité peut être utilisé tel quel, où éventuellement après remise en suspension aqueuse.

La dispersion colloïdale aqueuse directement issue de l'étape (b), le précipité séparé de ses eaux mères encore sous sa forme humide, ou le précipité remis en suspension aqueuse, est ensuite mise en contact avec au moins un acide et un diluant, tels que définis précédemment (étape c).

La concentration en oxydes totaux (oxydes d'éléments de terres rares et d'élément (E)) de la dispersion colloïdale aqueuse employée dans l'étape (c), peut varier entre 20 g/l à 300g/l, de préférence entre 50 g/l et 150 g/l.

Lorsque dans l'étape (c) le précipité est utilisé sous sa forme humide, la proportion en oxydes dudit précipité peut varier entre 10 à 50 % en poids par rapport à la masse du précipité humide. Les pourcentages en oxydes totaux peuvent être déterminés par pertes au feu, par exemple par calcination à 1000°C.

Pour obtenir une dispersion colloïdale organique dans l'étape (c), on met en contact soit la dispersion colloïdale aqueuse de l'étape (b) soit le précipité éventuellement redispersé, avec au moins un acide et un diluant. La quantité d'acide à incorporer peut être défini par le rapport molaire r :

$$r = \frac{\text{nombre de mole d'acide}}{\text{nombre de mole d'éléments de terre(s) rare(s)}}$$

Ce rapport molaire peut être compris 0,2 et 0,8, de préférence entre 0,3 et 0,6.

La quantité de diluant à incorporer est ajustée de manière à obtenir une concentration en oxydes totaux telle que mentionnée plus haut.

A ce stade, il peut être avantageux d'ajouter dans la phase organique un agent promoteur dont la fonction est d'accélérer le transfert des particules de composé(s) de la phase aqueuse à la phase organique et d'améliorer la stabilité des dispersions colloïdales organiques obtenues.

A titre d'agent promoteur, on peut utiliser les composés à fonction alcool et tout particulièrement des alcools aliphatiques linéaires ou ramifiés ayant de 6 à 12 atomes de carbone. Comme exemples spécifiques, on peut citer l'éthyl-2 hexanol, le décanol, le dodécanol ou leurs mélanges.

La proportion dudit agent n'est pas critique et peut varier dans de larges limites. Toutefois, une proportion comprise entre 2 et 15 % en poids convient généralement bien.

L'ordre de l'introduction des différents réactifs est indifférent. On peut effectuer le mélange simultané de la dispersion colloïdale aqueuse, de l'acide, du diluant, et éventuellement l'agent promoteur. On peut également faire le prémélange de l'acide, du diluant et éventuellement de l'agent promoteur.

La mise en contact entre la dispersion colloïdale aqueuse et la phase organique peut se faire dans un réacteur qui est sous une atmosphère d'air, d'azote, ou un mélange d'air-azote.

Bien que la mise en contact entre la dispersion colloïdale aqueuse et la phase organique puisse se faire à température ambiante, environ 20°C, il est préférable d'opérer à une température choisie dans un intervalle allant de 60°C à 150°C, avantageusement entre 80°C et 140°C.

Dans certains cas, en raison de la volatilité du diluant, il y a lieu de condenser ses vapeurs par refroidissement à une température inférieure à son point d'ébullition.

Le mélange réactionnel résultant (mélange de dispersion colloïdale aqueuse, d'acide, de diluant et éventuellement d'agent promoteur) est maintenu sous agitation pendant toute la durée du chauffage, durée qui peut être variable.

Lorsque l'on arrête le chauffage, on note la présence de deux phases : une phase organique contenant la dispersion colloïdale, et une phase aqueuse résiduelle.

Quelquefois on peut observer la présence d'une troisième phase émulsionnée.

On sépare ensuite la phase organique et la phase aqueuse selon les techniques classiques de séparation : décantation, centrifugation.

Conformément à la présente invention, on obtient ainsi des dispersions colloïdales organiques présentant les caractéristiques précitées.

Les dispersions colloïdales organiques qui viennent d'être décrites peuvent être employées comme adjuvant de gazole pour moteurs à combustion interne, plus particulièrement comme adjuvant des gazoles pour moteur diesel.

Elles peuvent également être utilisées comme adjuvants de combustion dans les combustibles ou carburants liquides des générateurs énergétiques tels que moteurs à explosion, brûleurs à mazout, ou propulseurs à réaction.

L'invention a enfin pour objet les carburants pour moteur à combustion interne obtenu par mélange à un carburant usuel d'une dispersion colloïdale organique selon l'invention.

Les exemples et figures présentés ci-après sont à titre illustratif et non limitatif de la présente invention.

**Figures**

Figure 1 : Photographie obtenue par MET d'une dispersion colloïdale organique de $CeO_2$ selon l'invention, préparée d'après l'enseignement de l'exemple 1.

Figure 2 : Photographie obtenue par MET d'une dispersion colloïdale organique de $CeO_2$ selon l'art antérieur,

préparée d'après l'enseignement de l'exemple 7.

**EXEMPLES**

**Exemple 1 : Elaboration d'une solution colloïdale organique de $CeO_2$ élaborée à partir d'acétate de cérium (III)**

Dans cet exemple, la préparation de la solution colloïdale organique d'oxyde de cérium comporte les étapes suivantes :

1/ obtention d'un précipité solide en phase aqueuse ;
2/ transfert en phase organique.

1/ Obtention d'un précipité solide en phase aqueuse.

A 279,3 g d'acétate de cérium (III) cristallisé (à 49,29% en équivalent oxydes $CeO_2$), commercialisé par la société Rhodia Terres Rares, on additionne 1800 ml d'eau permutée. La dissolution du sel cristallisé est réalisée pendant environ une heure sous agitation.
On additionne alors 22,8 ml d'acide acétique pur de la société Prolabo et on ajuste le volume à 2000 ml. Après homogénéisation , le pH de la solution est de 4,3. Cette solution d'acétate de cérium (III) présente ainsi une concentration en cérium (III) de 0,4M et un rapport $CH_3COOH/Ce(III)$ = 0,5 molaire.
La précipitation du solide est réalisée dans un montage en continu comprenant :

- un réacteur d'un litre équipé d'un agitateur à pales, réglé à 400 tr/mn, avec un pied de cuve de 0,5 l de solution basique ($NH_4OH$ à pH 10,5) et d'une électrode asservie à une pompe régulatrice de pH dont la consigne est fixée à pH 10,5 ;
- deux flacons d'alimentation contenant d'une part la solution d'acétate de cérium précédemment décrite et d'autre part, une solution d'ammoniaque 6N, le débit de la solution d'acétate de cérium est fixé à 500 ml/h et le débit d'ammoniaque est asservie à la régulation de pH ;
- un système de soutirage (pompe) permettant d'ajuster le volume dans le réacteur égal à 0,5 litre et connecté au deuxième réacteur placé en série du premier ;
- un deuxième réacteur permettant de récupérer le précipité formé.

Le précipité est récupéré par centrifugation (12 mn à 3000 tr/mn). La teneur en oxyde est déterminée par perte au feu : la teneur en $CeO_2$ égale à environ 23%.
Le précipité est alors remis en suspension dans de l'eau permutée à 50g/l en $CeO_2$.

2/ Transfert en phase organique

340 ml de la suspension aqueuse précédemment décrite sont introduits dans un réacteur double enveloppe de 2 litres équipé d'un bain thermostaté.
On additionne à température ambiante et sous agitation, une phase organique contenant 136,1 g d'Isopar commercialisé par EXXON et 16,9 g d'acide isostéarique (AIS) préalablement dissous.
La vitesse d'agitation étant fixée à 150 tr/mn, l'ensemble réactionnel est porté à 88°C et maintenu à cette température pendant 4 heures. La formation d'une phase émulsionnée dans le réacteur a été constatée.
Après séparation dans une ampoule à décanter 40 g de phase supérieure organique brune est récupérée. Cette phase organique est mise à centrifuger à 4500 tr/mn pendant 10 mn, puis filtrée sur membrane hydrophobe.

Caractéristiques de la phase colloïdale organique de $CeO_2$.

La concentration de la phase colloïdale organique, déterminée après évaporation de l'Isopar et calcination à 1000°C est égale à 6,4% en $CeO_2$.
L'observation en MET haute résolution montre qu'au moins 90 % des particules sont monocristallines (Figure 1).
Ledites particules présentent un $d_{50}$ de 2,5 nm. On constate également que 80 % des particules ont une taille comprise entre 1 et 4 nm.

**Exemple 2 : Solution colloïdale organique de $CeO_2$ élaborée à partir d'un mélange d'acétate de cérium (III) et de nitrate de cérium (IV)**

Comme décrit à l'exemple 1, la préparation de la solution colloïdale organique d'oxyde de cérium comporte deux étapes:,

1/ formation d'un précipité solide en phase aqueuse ;
2/ transfert en phase organique.

1/ Obtention d'un précipité solide en phase aqueuse.

A 279,3 g d'acétate de cérium (III) cristallisé (à 49,29% en oxydes CeO2), commercialisé par la socété Rhodia Terres Rares, on additionne 1600 ml d'eau permutée. La dissolution du sel cristallisé est réalisée pendant environ une heure sous agitation.
On additionne alors 22,8 ml d'acide acétique pur de la société Prolabo.
A 148 ml de solution de nitrate de cérium (IV) (à 1,35 mole/l en $Ce^{4+}$ et rapport $H^+/Ce^{4+}$ = 0,5 molaire), commercialisé par la société Rhodia Terres Rares, sont additionnés 158,1 ml d'acide nitrique concentré de la société Prolabo.
La solution de nitrate de cérium (IV) ainsi préparée est mélangée à la solution d'acétate de de cérium (III) à température ambiante. On ajuste le volume à 2500 ml. La concentration équivalente en $CeO_2$ est alors de 0,4 M.
La précipitation du solide est réalisé dans le montage en continu précédemment décrit sauf que le flacon d'alimentation de la solution d'acétate de cérium (III) contient le mélange acétate de cérium (III) et nitrate de cérium (IV) tel que décrit ci-dessus.
La teneur en oxyde du précipité récupéré est déterminée par perte au feu : teneur en $CeO_2$ égale à environ 29%.
Le précipité est alors remis en suspension dans de l'eau permutée à 50g/l en $CeO_2$.

2/ Transfert en phase organique.

340 ml de la suspension aqueuse précédemment décrite sont introduites dans un réacteur double enveloppe de 2 litres équipé d'un bain thermostaté.
On additionne à température ambiante et sous agitation, une phase organique contenant 136,1 g d'Isopar et 16,9 g d'acide isostéarique (AIS) préalablement dissous.
La vitesse d'agitation étant fixée à 150 tr/mn, l'ensemble réactionnel est porté à 88°C et mainenu à cette température pendant 4 heures.
La formation d'une phase émulsionnée dans le réacteur a été notée.
Après séparation dans une ampoule à décanter 105 g de phase supérieure organique brune est récupérée. Cette phase organique est mise à centrifuger à 4500 tr/mn pendant 10 mn , puis filtrée sur membrane hydrophobe.

Caractéristiques de la phase colloïdale organique de $CeO_2$.

La concentration de la phase colloïdale organique, déterminée après évaporation de l'Isopar et calcination à 1000°C est égale à 8,9% en $CeO_2$
Comme dans l'exemple précédent, l'observation en MET haute résolution montre qu'au moins 90 % des particules sont monocristallines. Ledites particules présentent un $d_{50}$ de 3 nm.

**Exemple 3 : Solution colloïdale organique de $CeO_2$ élaborée à partir d'un mélange d'acétate de cérium (III) et de nitrate de fer (III)**

Comme décrit à l'exemple 1, la préparation de la solution colloïdale organique d'oxyde de cérium comporte deux étapes:

1/ formation d'un précipité solide en phase aqueuse ;
2/ transfert en phase organique.

1/ Obtention d'un précipité solide en phase aqueuse

*Préparation de la solution d'acétate de Fer*

On prépare une solution de nitrate de fer (III) à 0,5 mole/l en Fe soit 206,1 g de $Fe(NO_3)_3,9H_2O$ de la sociétéProlabo, de pureté 98% ajusté à 1 litre.
On additionne 270 ml de $NH_4OH$ préparée à 10 % à l'aide d'une pompe péristaltique à un débit de 10 ml/min à la solution de nirate de fer mise sous agitation jusqu'à un pH 7.
Le précipité est centrifugé à 4500 tr/mn pendant 12 mn, puis remis en suspension au volume initial par de l'eau déminéralisée. On met sous agitation pendant 15 minutes. On remet en suspension à nouveau à un volume final équivalent.
Le pH de la dispersion est de 6,5. Un volume de 100 ml d'acide acétique à 100%, de la société Prolabo est alors additionnée, le pH de la dispersion est de 2,7. Le pourcentage en oxyde déterminée par perte au feu est de 2,84 % en $Fe_2O_3$ %.

*Préparation de la solution de co-acétates*

A 312,6 g d'acétate de cérium (III) cristallisé (à 49,29% en oxydes $CeO_2$), commercialisé par la société Rhodia Terres Rares, on additionne 1790 ml d'eau permutée. La dissolution du sel cristallisé est réalisée pendant environ une heure sous agitation.
On additionne alors 15 g d'acide acétique pur de la société Prolabo, 610,5 ml de la solution d'acétate de fer préalablement préparée, à la solution d'acétate de cérium, puis 84,7 ml d'eau permutée. On recueille ainsi 2500 ml de solution de co-acétates à pH 4,6.
La précipitation du solide est réalisée dans le montage en continu précédemment décrit sauf que le flacon d'alimentation de la solution d'acétate de cérium (III) contient le mélange acétate de cérium (III) et acétate de fer(III) précédemment décrit et que la précipitation est réalisée sous une atmosphère d'azote.
La teneur en oxyde du produit précipité récupéré est déterminée par perte au feu (teneur en oxyde total contenu égale à environ 16%). Le précipité est remis e suspension dans l'eau permutée à 50g/l en oxyde .

2/ Transfert en phase organique.

340 ml de la suspension aqueuse précédemment décrite sont introduites dans un réacteur double enveloppe de 2 litres équipé d'un bain thermostaté.
On additionne à température ambiante et sous agitation, une phase organique contenant 134,1 g d'Isopar et 18,9 g d'acide isostéarique (AIS) préalablement dissous.
La vitesse d'agitation étant fixée à 150 tr/mn, l'ensemble réactionnel est porté à 88°C et maintenu à cette température pendant 4 heures.
Après séparation dans une ampoule à décanter, une phase supérieure organique brune est récupérée. Cette phase organique est mise à centrifuger à 4500 tr/ mn pendant 10 mn, puis filtrée sur membrane hydrophobe.

Caractéristiques de la phase colloïdale organique à base de $CeO_2$ - $Fe_2O_3$

La concentration de la phase colloïdale organique, déterminée après évaporation de l'isopar et calcination à 1000°C est égale à 6,73% en oxyde total (0,8 $CeO_2$ - 0,2 $Fe_2O_3$).
L'observation en MET haute résolution montre qu'au moins 90 % des particules sont monocristallines. Ledites particules présentent un $d_{50}$ de 2,5 nm. On constate également que les particules ont une taille comprise entre 2 et 4 nm.

**Exemple 4 : Solution colloïdale organique de $CeO_2$ élaborée à partir d'un mélange d'acétate de cérium (III) et de $TiOCl_2$**

La préparation de la solution colloïdale organique d'oxyde de cérium comporte deux étapes :

1/ formation d'un précipité solide en phase aqueuse ;
2/ transfert en phase organique.

1/ Obtention d'un précipité solide en phase aqueuse.

A 250,13 g d'acétate de cérium (III) hydraté à 49,29% en $CeO_2$, commercialisé par Rhodia Terres Rares, on

additionne 20,5 ml d'acide acétique de la société Prolabo, à 100% et 1432 ,6 ml d'eau permutée, 97,3 g de solution de $TiOCl_2$ (1,84 mol/kg en Ti, Cl = 6,63 mol/kg, d = 1,286 soit Cl/Ti= 3,6).

Le pH du mélange après addition de 150 ml d'HCl 2M et de 140 ml d'HCl concentré à 36% est de 0,5. On ajuste le volume à 2000 ml par 181,2 g d'eau déminéralisée.

La précipitation du solide est réalisée dans un montage en continu décrit précédemment. Le réacteur est alimenté avec un pied de cuve de 0,5 l d'eau permutée préalablement ajusté à pH 10,5. L'électrode est asservie à une pompe régulatrice de pH dont la consigne est fixée à pH 10,5.

Les deux flacons d'alimentation contiennent d'une part la solution de sels de cérium précédemment décrite et d'autre part, une solution d'ammoniaque 6N. Le débit de la solution d'acétate de cérium est fixé à 500 ml/h et le débit d'ammoniaque est asservie à la régulation de pH.

Le précipité est récupéré par centrifugation (12 mn à 3000 tr/mn) . La teneur en oxyde est déterminée par perte au feu : teneur en oxydes égale à environ 16,5 %. Le précipité est alors remis en suspension dans de l'eau permutée à 50g/l en oxyde.

2/ Transfert en phase organique.

340 ml de la suspension aqueuse précédemment décrite sont introduites dans un réacteur double enveloppe de 2 litres équipé d'un bain thermostaté. On additionne à température ambiante et sous agitation, une phase organique contenant 134,1 g d'isopar et 18,9 g d'acide isostéarique (AIS) préalablement dissous.

La vitesse d'agitation étant fixée à 150 tr/mn, l'ensemble réactionnel est porté à 88°C et maintenu à cette température pendant 4 heures.

Après arrêt de l'agitation, on observe une phase supérieure organique brune, récupérée après transfert et séparation dans une ampoule à décanter. Cette phase organique est mise à centrifuger à 4500 tr/mn pendant 10 mn, puis filtrée sur membrane hydrophobe.

La concentration de la phase colloïdale organique, déterminée après évaporation de l'isopar et calcination à 1000°C est égale à 6,58 % en oxydes

L'observation en MET haute résolution montre qu'au moins 90 % des particules sont monocristallines. Ledites particules présentent un $d_{50}$ de 3 nm. On a également constaté que les partaicules avaient une taille comprise entre 2 et 4 nm.

**Exemple 5 : Solution colloïdale organique de $CeO_2$ élaborée à partir d'un mélange d'acétate de cérium (III) et de $ZrO(NO_3)_2$**

La préparation de la solution colloïdale organique d'oxyde de cérium comporte deux étapes:

1/ formation d'un précipité solide en phase aqueuse ;
2/ transfert en phase organique.

1/ Obtention d'un précipité solide en phase aqueuse.

A 236,7 g d'acétate de cérium (III) hydraté à 49,29% en $CeO_2$, commercialisé par la société Rhodia Terres Rares, on additionne 20,3 ml d'acide acétique de la société Prolabo, à 100% et 1356ml d'eau permutée. On additionne ensuite 150 ml d'$HNO_3$ concentré de la société Prolabo, et 60,3 ml de solution de $ZrO(NO_3)_2$ commercialisé par Anan Kasei (23,32% en $ZrO_2$, et d = 1,49).

Le pH du mélange après mise sous agitation est de 0,5. On ajuste à 2000 ml par 181,2 g d'eau permutée.

La précipitation du solide est réalisée dans un montage en continu décrit précédemment. Le réacteur est alimenté avec un pied de cuve de 0,5 l 1 d'eau permutée préalablement ajusté à pH 10,5. L'électrode est asservie à une pompe régulatrice de pH dont la consigne est fixée à pH 10,5.

Les deux flacons d'alimentation contiennent d'une part la solution de sels de cérium précédemment décrite et d'autre part, une solution d'ammoniaque 6N. Le débit de la solution d'acétate de cérium est fixé à 500 ml/h et le débit d'ammoniaque est asservie à la régulation de pH.

Le précipité est récupéré par centrifugation ( 12 mn à 3000 tr/mn). La teneur en oxyde est déterminée par perte au feu : teneur en oxydes égale à environ 21 %. Le précipité est alors remis en suspension dans de l'eau permutée à 50g/l en oxyde.

2/ Transfert en phase organique.

325 ml de la suspension aqueuse précédemment décrite sont introduites dans un réacteur double enveloppe

de 2,0 litres équipé d'un bain thermostaté. On additionne à température ambiante et sous agitation, une phase organique contenant 165,5 g d'Isopar et 17 g d'acide isostéarique (AIS) préalablement dissous.

La vitesse d'agitation étant fixée à 150 tr/mn, l'ensemble réactionnel est porté à 88°C et maintenu à cette température pendant 4 heures.

Après arrêt de l'agitation, on observe la formation d'une émulsion. Après séparation dans une ampoule à décanter, une phase supérieure organique de couleur brune est récupérée. Cette phase organique est mise à centrifuger à 4500 tr/mn pendant 10 mn , puis filtrée sur membrane hydrophobe.

La concentration de la phase colloïdale organique, déterminée après évaporation de l'Isopar et calcination à 1000°C est égale à 7,35 % en oxydes.

La MET haute résolution montre qu'au moins 90 % des particules sont monocristallines. Ledites particules présentent un $d_{50}$ de 2,5 nm. On a égélement constaté que les particules avaient une taille comprise entre 2 et 4 nm.

**Exemple 6 (comparatif) : Dispersion colloïdale organique à base de cérium-fer selon l'art antérieur**

Cet exemple concerne la préparation d'un composé cérium-fer dans les proportions respectives de 90/10 en poids d'oxydes, préparé selon l'enseignement de FR-A-2741281.

On part d'une solution d'acétate de fer obtenue à partir de nitrate de fer par précipitation à l'ammoniaque à pH 7, puis lavage du précipité et résolubilisation dans l'acide acétique à pH 1,5.

On forme un mélange d'acétate de cérium et de fer en solution à 70 g/l dans le rapport d'oxydes 90/10. On fait réagir en continu cette dernière solution avec une solution d'ammoniaque 4M. Les débits respectifs de solution et d'ammoniaque sont de 24 ml/mn et de 26 ml/mn. Le pH du milieu réactionnel est de 11.

Le précipité obtenu est séché avec un atomiseur Büchi avec une température de sortie de 110°C.

20 g d'oxyde Ce/Fe (90/10 en poids d'oxydes) sous forme d'hydrate atomisé sont repris dans 200 ml d'eau de façon à obtenir une dispersion colloïdale aqueuse de 100 g/l. Pour former 100 g de sol organique, 10 g d'acide isostéarique sont dilués dans 70 g de Solvesso 150 de façon à obtenir un rapport molaire acide isostéarique/oxyde de 0,3 et une concentration finale en oxyde mixte dans la phase organique de 20 %.

La phase organique est mise en contact avec la phase aqueuse sous faible agitation (100 tr/mn) puis le mélange est porté à reflux (100 à 103°C) pendant 4 heures.

Après décantation la phase organique chargée en cérium fer est filtrée sur filtre hydrophobe puis éventuellement centrifugée à 4500 tr/mn.

La concentration de la phase colloïdale organique déterminée pa l'évaporation de Solvesso et calcination à 1000°C est égale à 19 % en oxyde.

Par observation en MET haute résolution, on n'a pas pu mettre en évidence qu'au moins 90 % des particules étaient monocristallines. La dispersion colloïdale obtenue est principalement constituée de particules de 4 à 8 nm et quelques particules de 20 à 30 nm.

**Exemple 7 (comparatif) : Dispersion colloïdale organique de cérium selon l'art antérieur**

La synthèse du sol organique de cérium, préparé selon l'enseignement de EP-A-671205, se déroule en deux étapes :

1/ obtention d'une dispersion colloïdale de cérium en phase aqueuse ;
2/ transfert en phase organique.

<u>1/ Obtention d'une dispersion colloïdale de cérium en phase aqueuse.</u>

415 ml d'une solution de nitrate de cérium (IV) (1,4 mol/l ; 0,58 mol/l d'acide libre, d=1,433) sont neutralisés par 835 ml d'une solution d'ammonique à 0,64 mol/l de telle sorte à obtenir, en final, une solution à 80 g/l en $CeO_2$ préneutralisée à [OH] / [Ce] = 0,5.

La solution est ensuite placée dans un autoclave, portée à la température de 150°C en heure puis laissée à 150°C pendant 4 heures. Après refroidissement, l'hydrate obtenu est filtré et la teneur en oxyde est déterminée par perte au feu à 1000°C.

40 g d'oxyde de cérium sous forme d'hydrate est repris dans 250 ml d'eau permutée de telle sorte à obtenir une dispersion colloïdale aqueuse de concentration 160 g/l.

<u>2/ Transfert en phase organique.</u>

Pour former 100 g de dispersion colloïdale, 19,9 g d'acide isostéarique (AIS) sont dilués dans 40,1 g de

Solvesso de telle sorte à obtenir en final un rapport molaire AIS / Ce de 0,3 et une concentration finale en $CeO_2$ en phase organique de 40 %.

La phase organique est mise en contact avec la phase aqueuse sous faible agitation puis le mélange est porté à reflux (100-103°C) pendant 15 heures.

La phase organique, après décantation, est filtrée sur filtre hydrophobe puis éventuellement centrifugée à 4500 tr/mn.

La dispersion colloïdale obtenue, de concentration 40 % massique en oxyde de cérium, présente une couleur noire limpide.

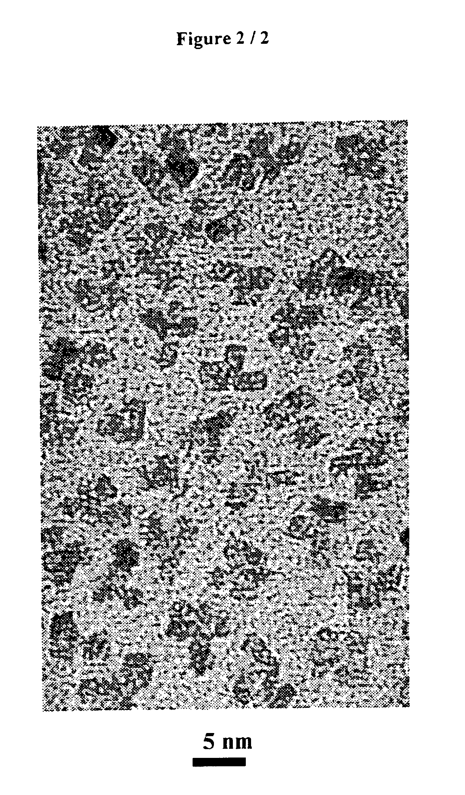

La MET haute résolution montre que les particules ne sont pas monocristallines (Figure 2), mais que 80 % de ces particules sont constitués de 3 à 4 cristallites.

**Exemple 8 : Evaluation des additifs décrits dans les exemple 1 à 7 sur un banc moteur.**

Au niveau du banc moteur, on procède de la manière suivante : un moteur Daimler-Benz 240 D diesel de 2,4 l de cylindré, atmosphérique avec boîte manuelle est placé sur un banc dynanométrique. La ligne d'échappement est équipée d'un filtre à particules (CORNING EX 47 5,66 x 6,00). La température des gaz d'échappement est mesurée à l'entrée du filtre à particule's grâce à des thermocouples. La pression différentielle entre l'entrée et la sortie du filtre à particules est mesurée également.

L'additif est ajouté au carburant de manière à réaliser un dosage à 50 ppm de métal par rapport au carburant additivé.

Le filtre à particules est chargé en particules grâce à la réalisation de 2 cycles consécutifs correspondant au cycle décrit par les 7 modes dans le Tableau I.

Tableau I :

| **Cycle de chargement " 7 modes "** | | | | |
|---|---|---|---|---|
| **Mode** | **Vitesse (tr/mn))** | **Charge (% max)** | **Couple (Nm)** | **Durée (min)** |
| 1 | Ralenti | - | 0 | 5 |
| 2 | 3000 | 10 | 11 | 10 |
| 3 | 3000 | 25 | 28 | 10 |
| 4 | Ralenti | - | 0 | 10 |
| 5 | 4300 | 10 | 10 | 10 |
| 6 | 4300 | 25 | 25 | 10 |
| 7 | Ralenti | - | 0 | 5 |

Ensuite le régime moteur est fixé de manière à correspondre à une vitesse de 90 km/h sur le quatrième rapport. On augmente alors la charge à régime moteur constant pour provoquer l'élévation de température des gaz d'échappement.

La perte de charge créée par le filtre à particules augmente dans un premier temps du fait de l'augmentation de température puis elle atteint un maximum avant de redescendre du fait de la combustion des matériaux carbonés accumulés dans le filtre à particules. On considère le point (repéré par sa température) à partir duquel la perte de charge n'augmente plus, comme représentatif du point de régénération du filtre à particules par l'additif.

Un essai réalisé en l'absence d'additif dans le carburant fixe la valeur de référence.

<u>Résultats sur banc moteur obtenus avec les additifs décrits dans les exemples 1 à 7</u>

| **Référence de l'additif** | **Composition de l'additif** | **$T_{régénération}$ (°C)** |
|---|---|---|
| 1 | $CeO_2$ | 491 |
| 2 | $CeO_2$ | 489 |
| 3 | Ce/Fe (80/20) | 465 |

(suite)

| Référence de l'additif | Composition de l'additif | $T_{régénération}$ (°C) |
|---|---|---|
| 4 | Ce/Ti (80/20) | 472 |
| 5 | Ce/Zr (80/20) | 485 |
| 6 (art antérieur) | Ce/Fe (90/10) | 546 |
| 7 (art antérieur) | Ce (100) | 545 |
| - | Sans | 600 |

Les résultats obtenus sur banc moteur avec des additifs selon l'invention et ceux de l'art antérieur montrent que la température de régénération d'un filtre à particules par est abaissée de façon significative lorsque les particules accumulées ont été générées à partir d'un carburant additivé par une dispersion organique de la présente invention.
On peut également en conclure que pour le même dosage en additif (50 ppm de métal par rapport au carburant additivé), les dispersions de la présente invention sont plus performantes.

## Revendications

**1.** Dispersion colloïdale organique comportant :

- des particules d'au moins un composé à base d'au moins une terre rare,
- au moins un acide, et
- au moins un diluant,

**caractérisée en ce qu'**au moins 90 % des particules sont monocristallines.

**2.** Dispersion colloïdale selon la revendication 1, **caractérisée en ce que** la terre rare est choisi parmi le cérium, le lanthane, l'yttrium, le néodyme, le gadolinium, le praséodyme.

**3.** Dispersion colloïdale selon l'une des revendications 1 ou 2, **caractérisée en ce que** le composé est à base d'au moins deux terres rares, identiques ou différentes, lesdites terres rares ayant des degrés d'oxydation différents.

**4.** Dispersion colloïdale selon l'une quelconque des revendications 1 à 3, **caractérisée en ce qu'**elle comporte au moins un autre élément (E) choisi dans les groupes IIA, IVA, VIIA, IB, IIB, IIIB et IVB de la classification périodique des éléments.

**5.** Dispersion colloïdale selon la revendication 4, **caractérisée en ce que** ledit élément (E) est choisi parmi le fer, le cuivre, le strontium, le zirconium, le titane, le gallium, le palladium, le manganèse.

**6.** Dispersion colloïdale selon l'une des revendications 4 ou 5, **caractérisé en ce que** la proportion en terre(s) rare (s) est de préférence d'au moins 10 %, plus particulièrement d'au moins 20 %, et encore plus particulièrement d'au moins 50 %, en mole par rapport au nombre de mole total d'élément(s) de terre(s) rare(s) et de (E) exprimés en oxyde.

**7.** Dispersion colloïdale selon l'une quelconque des revendications 1 à 6, **caractérisée en ce que** les particules présentent un $d_{50}$ compris entre 1 et 5 nm, de préférence entre 2 et 3 nm.

**8.** Dispersion selon l'une quelconque des revendications 1 à 7, **caractérisée en ce que** le ou les acides est(sont) avantageusement amphiphile(s).

**9.** Dispersion colloïdale selon l'une quelconque des revendications 1 à 8, **caractérisée en ce que** le diluant est un hydrocarbure apolaire.

**10.** Dispersion colloïdale selon l'une quelconque des revendications 1 à 3 et 7 à 9, **caractérisée en ce qu'**elles présentent une concentration en composé(s) de terre(s) rare(s) allant jusqu'à 40 % en poids d'oxyde(s) de terre(s)

rare(s) par rapport au poids total de la dispersion.

**11.** Dispersion colloïdale selon l'une quelconque des revendications 4 à 9, **caractérisée en ce qu'**elles présentent une concentration en composés(s) de terre(s) rare(s) et d'élément(s) (E) allant jusqu'à 40 %, de préférence comprise entre 1 et 32 % en poids d'oxyde(s) de terre(s) rare(s) et d'élément(s) (E) par rapport au poids total de la dispersion.

**12.** Procédé de préparation d'une dispersion selon l'une quelconque des revendications 1 à 11, **caractérisé en ce qu'**il comporte les étapes suivantes :

a) on prépare un mélange aqueux comprenant au moins un sel soluble, de préférence un acétate et/ou un nitrate, de l'élément ou des éléments qui rentrent dans la composition des particules que l'on cherche à obtenir,
b) on met le mélange aqueux de l'étape (a) en contact avec un milieu basique pour former un mélange réactionnel dont le pH est maintenu à un pH basique, ce par quoi on obtient, à l'issue de la réaction, un précipité ou une dispersion colloïdale aqueuse,
c) on met en contact soit la dispersion colloïdale aqueuse directement issue de l'étape (b) soit le précipité sous forme humide issu de l'étape (b) ou éventuellement redispersé en suspension aqueuse, avec au moins un acide et un diluant, pour obtenir une dispersion colloïdale organique.

**13.** Procédé selon la revendications 12, **caractérisé en ce que** dans l'étape b) l'on utilise comme milieu basique une solution d'ammoniaque.

**14.** Procédé selon l'une des revendications 12 ou 13, **caractérisé en ce que** l'on maintient le pH du mélange réactionnel à une valeur d'au moins 7, plus particulièrement d'au moins 7,5, et encore plus particulièrement comprise entre 7,5 et 10,5.

**15.** Utilisation d'une dispersion colloïdale selon l'une quelconque des revendications 1 à 11, comme adjuvant de gazole pour moteurs à combustion interne.

**16.** Carburant pour moteur à combustion interne, **caractérisé en ce qu'**il est obtenu par mélange à un carburant usuel d'une dispersion colloïdale selon l'une quelconque des revendications 1 à 11.

**Patentansprüche**

**1.** Kolloidale organische Dispersion umfassend:

- Teilchen aus wenigstens einer Verbindung auf der Basis wenigstens einer Seltenerde,
- wenigstens eine Säure, und
- wenigstens ein Verdünnungsmittel,

**dadurch gekennzeichnet, dass** wenigstens 90 % der Teilchen monokristallin sind.

**2.** Kolloidale Dispersion gemäß Anspruch 1, **dadurch gekennzeichnet, dass** die Seltenerde aus Cer, Lanthan, Yttrium, Neodym, Gadolinium, Praesodym ausgewählt wird.

**3.** Kolloidale Dispersion gemäß einem der Ansprüche 1 oder 2, **dadurch gekennzeichnet, dass** die Verbindung auf der Basis von wenigstens zwei Seltenerden ist, die gleich oder verschieden sind, wobei die Seltenerden unterschiedliche Oxidationsstufen aufweisen.

**4.** Kolloidale Dispersion gemäß einem der Ansprüche 1 bis 3, **dadurch gekennzeichnet, dass** sie wenigstens ein weiteres Element (E) umfasst, das aus den Gruppen IIA, IVA, VIIA, IB, IIB, IIIB und IVB des periodischen Systems der Elemente ausgewählt wird.

**5.** Kolloidale Dispersion gemäß Anspruch 4, **dadurch gekennzeichnet, dass** das Element (E) aus Eisen, Kupfer, Strontium, Zirkonium, Titan, Gallium, Palladium, Mangan ausgewählt wird.

**6.** Kolloidale Dispersion gemäß einem der Ansprüche 4 oder 5, **dadurch gekennzeichnet, dass** das Verhältnis von

Seltenerde(n) bevorzugt wenigstens 10 %, insbesondere wenigstens 20 % und noch bevorzugter wenigstens 50 % beträgt, in Mol bezogen auf die Gesamtmolzahl der Seltenerdelement(e) und (E), dargestellt als Oxid.

**7.** Kolloidale Dispersion gemäß einem der Ansprüche 1 bis 6, **dadurch gekennzeichnet, dass** die Teilchen einen $d_{50}$ aufweisen, der zwischen 1 und 5 nm liegt, bevorzugt zwischen 2 und 3 nm.

**8.** Dispersion gemäß einem der Ansprüche 1 bis 7, **dadurch gekennzeichnet, dass** die Säure oder die Säuren vorzugsweise amphiphil ist oder sind.

**9.** Kolloidale Dispersion gemäß einem der Ansprüche 1 bis 8, **dadurch gekennzeichnet, dass** das Verdünnungsmittel ein apolarer Kohlenwasserstoff ist.

**10.** Kolloidale Dispersion gemäß einem der Ansprüche 1 bis 3 und 7 bis 9, **dadurch gekennzeichnet, dass** sie eine Konzentration an Seltenerde(n)-Verbindung(en) aufweisen, die bis zu 40 Gew.-% Seltenerde(n)-Oxid(e), bezogen auf das Gesamtgewicht der Dispersion, beträgt.

**11.** Kolloidale Dispersion gemäß einem der Ansprüche 4 bis 9, **dadurch gekennzeichnet, dass** sie eine Konzentration an Seltenerde(n)-Verbindung(en) und Element(en) (E) aufweisen, die bis zu 40 Gew.-%, bevorzugt im Bereich von 1 bis 32 Gew.-% Oxid(e) von Seltenerde(n) und Element(en) (E), bezogen auf das Gesamtgewicht der Dispersion, beträgt.

**12.** Verfahren zur Herstellung einer Dispersion gemäß einem der Ansprüche 1 bis 11, **dadurch gekennzeichnet, dass** es die folgenden Stufen umfasst:

a) Herstellen einer wässrigen Mischung, die wenigstens ein lösliches Salz, bevorzugt ein Acetat und/oder ein Nitrat, des Elements oder der Elemente umfasst, die in die Zusammensetzung der herzustellenden Teilchen Eingang finden,
b) Inkontaktbringen der wässrigen Mischung aus Stufe (a) mit einem basischen Medium, um eine Reaktionsmischung zu bilden, deren pH bei einem basischen pH gehalten wird, wodurch am Ende der Reaktion ein Niederschlag oder eine wässrige kolloidale Dispersion erhalten wird,
c) Inkontaktbringen von entweder der wässrigen kolloidalen Dispersion, die unmittelbar aus der Stufe (b) stammt, oder des Niederschlags in feuchter Form, der aus der Stufe (b) stammt oder gegebenenfalls in einer wässrigen Suspension wieder dispergiert worden ist, mit wenigstens einer Säure und einem Verdünnungsmittel, um eine organische kolloidale Dispersion zu erhalten.

**13.** Verfahren gemäß Anspruch 12, **dadurch gekennzeichnet, dass** in der Stufe (b) eine Ammoniaklösung als basisches Medium eingesetzt wird.

**14.** Verfahren gemäß einem der Ansprüche 12 oder 13, **dadurch gekennzeichnet, dass** der pH der Reaktionsmischung bei einem Wert von wenigstens 7 gehalten wird, vornehmlich wenigstens 7,5 und insbesondere zwischen 7,5 und 10,5.

**15.** Verwendung einer kolloidalen Dispersion gemäß einem der Ansprüche 1 bis 11 als Zusatzstoff für Brennstoff für Verbrennungsmotoren.

**16.** Kraftstoff für Verbrennungsmotoren, **dadurch gekennzeichnet, dass** er durch Mischen einer kolloidalen Dispersion gemäß einem der Ansprüche 1 bis 11 zu einem üblichen Kraftstoff erhalten wird.

## Claims

**1.** An organic colloidal dispersion comprising:

- particles of at least one compound based on at least one rare earth;
- at least one acid; and
- at least one diluent;

**characterized in that** at least 90% of the particles are monocrystalline.

**2.** A colloidal dispersion according to claim 1, **characterized in that** the rare earth is selected from cerium, lanthanum, yttrium, neodymium, gadolinium and praseodymium.

**3.** A colloidal dispersion according to claim 1 or claim 2, **characterized in that** the compound is based on at least two rare earths, which may be identical or different, said rare earths having different oxidation numbers.

**4.** A colloidal dispersion according to any one of claims 1 to 3, **characterized in that** it comprises at least one further element (E) selected from groups IIA, IVA, VIIA, IB, IIB, IIIB and IVB of the periodic table.

**5.** A colloidal dispersion according to claim 4, **characterized in that** said element (E) is selected from iron, copper, strontium, zirconium, titanium, gallium, palladium and manganese.

**6.** A colloidal dispersion according to claim 4 or claim 5, **characterized in that** the proportion of rare earth(s) is preferably at least 10%, more particularly at least 20%, and still more particularly at least 50%, in moles with respect to the total number of moles of the rare earth element(s) and (E) expressed as the oxide.

**7.** A colloidal dispersion according to any one of claims 1 to 6, **characterized in that** the particles have a $d_{50}$ in the range 1 to 5 nm, preferably in the range 2 to 3 nm.

**8.** A dispersion according to any one of claims 1 to 7, **characterized in that** the acid or acids is (are) advantageously amphiphilic.

**9.** A colloidal dispersion according to any one of claims 1 to 8, **characterized in that** the diluent is an apolar hydrocarbon.

**10.** A colloidal dispersion according to any one of claims 1 to 3 and 7 to 9, **characterized in that** it has a concentration of rare earth compound(s) of up to 40% by weight of rare earth oxide(s) with respect to the total dispersion weight.

**11.** A colloidal dispersion according to any one of claims 4 to 9, **characterized in that** it has a concentration of rare earth compound(s) and element(s) (E) of up to 40%, preferably in the range 1% to 32% by weight of the oxide(s) of the rare earth(s) and element(s) (E) with respect to the total dispersion weight.

**12.** A process for preparing a dispersion according to any one of claims 1 to 11, **characterized in that** it comprises the following steps:

a) preparing an aqueous mixture comprising at least one soluble salt, preferably an acetate and/or a nitrate, of the element or elements forming part of the composition of the particles to be obtained;
b) bringing the aqueous mixture from step a) into contact with a basic medium to form a reaction mixture with a pH that is maintained at a basic pH to form a precipitate or an aqueous colloidal dispersion at the end of the reaction;
c) bringing either the aqueous colloidal dispersion directly derived from step b), or the precipitate in its moist form derived from step b) or optionally re-dispersed in an aqueous suspension, into contact with at least one acid and a diluent to obtain an organic colloidal dispersion.

**13.** A process according to claim 12, **characterized in that** in step b), the basic medium is an ammonia solution.

**14.** A process according to claim 12 or claim 13, **characterized in that** the pH of the reaction mixture is maintained at a value of at least 7, more particularly at least 7.5, and still more particularly in the range 7.5 to 10.5.

**15.** Use of a colloidal dispersion according to any one of claims 1 to 11 as an additive for internal combustion engine gas oil.

**16.** A fuel for an internal combustion engine, **characterized in that** it is obtained by mixing a colloidal dispersion according to any one of claims 1 to 11 with a normal fuel.

Figure 1 / 2

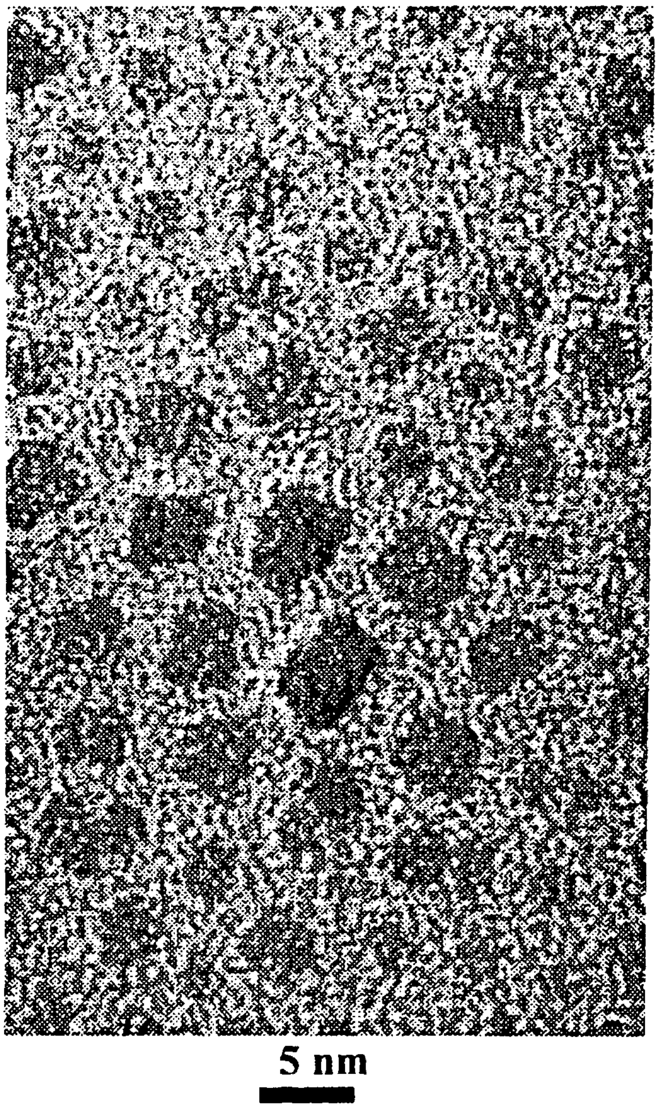

Figure 2 / 2